# EUROPEAN PATENT APPLICATION

(11) **EP 1 244 041 A2**
(43) Date of publication of application: **25.09.2002**
(21) Application number: 02005730.3
(22) Date of filing: 13.03.2002
(51) Int. Cl.: G06F 17/60

(54) **Simplified order-placement and reception processing method and system**

(30) Priority: 19.03.2001 JP 2001079026
(71) Applicant: JUKEN SANGYO CO., LTD., Hiroshima 738-8502 (JP)
(72) Inventor: Nakamoto, Yusho, Hatsukaichi-shi, Hiroshima, 738-0054 (JP); Muneishi, Tomio, Hiroshima-shi, Hiroshima, 731-5106 (JP); Teraoka, Takamichi, Hiroshima-shi 733-0871 (JP); Kanbara, Takashi, Hatsukaichi-shi, Hiroshima, 738-0017 (JP)
(74) Representative: Panten, Kirsten

(57) **Abstract**

A method processes a simplified order placement and reception in a system comprising a host computer and a PDA. The method includes storing stocked-product data and estimation data in an order placement and reception information database provided in the host computer, transmitting from the host computer to the PDA the stocked-product data which is accompanied by the estimation data of a relevant product distribution channel in response to an inquiry request from the PDA, displaying the stocked-product data transmitted from the host computer on a screen in the PDA, and placing an order from the screen on which the stocked-product data are displayed in the PDA.

## Description

### BACKGROUND OF THE INVENTION

### 1. Field of the Invention

The present invention relates to a method and system for simplified order-placement and reception processing, and more particularly, to a method and system for simplified order-placement and reception processing which enables a user to perform various tasks at, for example, a construction site through a simple operation performed on a PDA (Personal Digital Assistant), in relation to transactions conducted between, for example, an architectural material manufacturer and customers. Examples of the tasks include stock inquiry, estimation preparation, order placement, and checking of delivery status.

### 2. Description of the Related Art

An architectural material manufacturer conducts transactions every day with a large number of customers, including distributors such as wholesalers and builders such as builders. Customers order architectural materials in different combinations and under different conditions in terms of types and sizes of the architectural materials, delivery date and delivery site. Then, an order form has been complicated and cumbersome for the customer, and making an estimation sheet has been complicated and cumbersome for the architectural material manufacturer. For example, a customer must check the types, sizes, and installation methods of all necessary architectural materials, and place an order, while designating a size, number of pieces, installation method, delivery date, and delivery site for each type. Upon reception of the order, the architectural material manufacturer must secure the necessary numbers of architectural materials of the types designated by the customer. And, if necessary, the architectural material manufacturer must cut the architectural materials to designated sizes. Subsequently, the architectural material manufacturer must deliver the architectural materials to a designated construction site on a designated date. Therefore, the architectural material manufacturer must estimate or determine cost, the number of working days, and delivery method in consideration of all the above factors.

An order placement and reception processing system which enables online ordering of architectural materials has been used. However, the order placement and reception processing system can handle order placement only. Therefore, a customer who wishes to place an order first checks the details of a product (architectural material) with reference to a product catalogue, and picks out an execution drawing from a collection of execution drawings before preparation of order placement data. That is, tasks are not integrated. The thus-created order placement data are transmitted online to the architectural material manufacturer. And, the architectural material manufacturer prepares an estimation sheet on the basis of the order placement data and provides the estimate sheet to the product distribution channel of the customer; i.e., a distributor or builder. Subsequently, the distributor or builder places an order on the basis of the estimation sheet. Therefore, problems in relation to delivery have often occurred due to lack of communications between the customer and the manufacturer.

In the conventional on-line order placement and reception processing system for architectural materials, processing has been limited to substantially only order processing, and use of information has been insufficient, resulting in the following problems.
(1) In many cases, after a customer transmits design data, etc., to an architectural material manufacturer and requests an estimation, the customer must wait for a relatively long time before receiving an estimation sheet. This invites a delay in placing an order after confirmation of the estimation sheet, and consequently delayed delivery.
(2) Sometimes the customer may become aware of the omission of order for some materials at a location away from customer's office (e.g., a construction site). Sometimes the customer may arise the need to place an additional order urgently due to design change or the like at a location away from the office. In such a case, the customer may be unaware of the details of a previous order, so that the customer may confirm the stock and inquire about delivery date over phone, making the work for placing an additional order complicated and time consuming and prone to involving mistakes. Therefore, the customer cannot cope with such a situation quickly and reliably at a location away from the office.
(3) Information is not shared among customers. Then, a customer must newly create order data for each order, even in the case where a similar transaction has been carried out in the past between the architectural material manufacturer and another customer. Further, the architectural material manufacturer must create estimation sheets of the same contents repeatedly. Therefore, the conventional system has been inefficient.
(4) The most important factor in sales of architectural materials is just-in-time delivery of products to a construction site where conditions constantly change. Therefore, a salesperson at a retail shop must create an management table for each construction site of a builder, who is a customer of the shop, to manage complicated work. That is, the salesperson write in the table a date of delivery from a manufacture or wholesaler and a scheduled date of delivery to the construction site, for each item (flooring material, fittings, or the like).

### SUMMARY OF THE INVENTION

An object of the present invention is provide an order placement and reception processing system which enables a customer to check the details of a previous order or the status of delivery from any location, such as a construction site, away from customer's office, and which also enables the customer to immediately arrange an additional order or an urgent order/delivery at customer's location should the need arise.

In order to achieve the above object, the present invention enables a customer to access a host computer (having a network server function) of an order placement and reception processing system from any location by use of a PDA (including a mobile computer and mobile telephone), so as to inquire about inventory, data of an estimation or order created by the customer or other parties relating to a product distribution channel, or check the status of delivery, through simple operation performed on the PDA, and to place an additional order from an inventory inquiry screen or an order-placement-data inquiry screen through a simple operation. Further, in order to cope with urgent order or urgent delivery, the present invention enables precise calculation of delivery date and time in consideration of a delivery method, the number of days required for transportation, time and carrier charges.

The present invention provides a method to process a simplified order placement and reception in a system comprising a host computer and a personal digital assistant connected to the host computer via a network. The method comprises storing stocked-product data and estimation data in an order placement and reception information database provided in the host computer, transmitting from the host computer to the personal digital assistant the stocked-product data which is accompanied by the estimation data of a relevant product distribution channel in response to an inquiry request from the personal digital assistant, displaying the stocked-product data transmitted from the host computer on a screen in the personal digital assistant, and placing an order from the screen on which the stocked-product data are displayed in the personal digital assistant.

Preferably, the host computer sets known estimation data, as default values, to an order placement screen to be transmitted to the PDA.

Preferably, the host computer calculates a delivery date and estimated price on the basis of the estimation data which the user has input and set on the PDA by use of the order placement screen, and transmits in real time the delivery date and estimated price to the PDA.

Preferably, upon placement of an order, the host computer stores the estimation data in the order placement and reception information database as order placement data, and performs delivery management on the basis of the order placement data.

Preferably, the host computer manages the order placement data stored in the order placement and reception information database in such a manner that the order placement data can be referred to, while being sorted according to customer, according to delivery date, or according to delivery area.

Preferably, on the basis of the order placement data stored in the order placement and reception information database, the host computer manages delivery items and delivery schedules according to customer, according to execution method, or according to construction site.

Preferably, in response to an inquiry request or search request from the PDA, the host computer transmits data of a previous order placement to the PDA in order to enable the PDA to display the data on the screen to thereby enable placement of an additional order.

Preferably, the host computer stores in the order placement and reception information database shipment record data which represent delivery of a product based on the order placement data stored in the order placement and reception information database; and in response to a delivery-status inquiry request from the PDA, the host computer creates delivery status data with reference to the order placement data and the shipment record data and transmits the delivery status data to the PDA, to thereby enable the PDA to display the delivery status data on the screen.

Preferably, the PDA is a mobile telephone having an Internet connection function, and the network is the Internet.

The present invention provides a system to process a simplified order placement and reception comprising a host computer and a personal digital assistant connected to the host computer via a network, and which performs processing to order a product and to accept the order. The host computer further comprises an order placement and reception information database to store stocked-product data and estimation data, means for inquiring to retrieve the stocked-product data or estimation data of a relevant product distribution channel from the order placement and reception information database, to create an inquiry result screen containing the stocked-product data or estimation data, and to transmit the screen to the personal digital assistant to thereby enable the personal digital assistant to display the screen, in response to an inquiry request from the personal digital assistant, and means for creating estimation-data to transmit an order placement screen to the personal digital assistant in response to an order placement request which is issued from the personal digital assistant in a case that the inquiry result screen containing the stocked-product data is displayed, and to enable the personal digital assistant to input and set estimation data to the order placement screen.

Preferably, the host computer includes a member information file in which are registered data regarding to a member; a product-distribution-channel information file in which are registered data regarding customers relating to a product distribution channel to which the member relates; and member authentication processing means for recognizing an user ID which a customer inputs at the time of login, authenticating the member with reference to the member information file, and retrieving from the product-distribution-channel information file information regarding customers relating to the product distribution channel to which the member relates.

Preferably, the host computer includes delivery date calculation means for performing, in response to a delivery date inquiry request from the PDA, regular-delivery-service delivery-date calculation processing and urgent-delivery-service arrival date/time calculation processing, and for transmitting the calculated delivery date to the PDA to thereby enable the PDA to display the delivery date on the screen.

Preferably, when the delivery date inquiring request from the PDA includes designation of a desired delivery date, the delivery date calculation means performs the regular-delivery-service delivery-date calculation processing in order to calculate a delivery date for the case of regular delivery service being used, and provides the calculated delivery date as a reply. When the customer is not satisfied with calculated delivery date, the delivery date calculation means performs urgent-delivery-service arrival date/time calculation processing in order to calculate a delivery date for the case of urgent delivery service being used, and provides the calculated delivery date as a reply. When a plurality of urgent delivery services meet the requirement imposed on the arrival time, the delivery date calculation means transmits the plurality of urgent delivery services as a reply to thereby enable selection of one of the plurality of urgent delivery services.

Preferably, the host computer includes delivery status management means which manages in the order placement and reception information database shipment record data which represent delivery of a product based on the order placement data stored in the order placement and reception information database, and which creates, in response to a delivery-status inquiry from the PDA, delivery status data with reference to the order placement data and the shipment record data and transmits the delivery status data to the PDA, to thereby enable the PDA to display the delivery status data on the screen.

Preferably, the PDA is a mobile telephone having an Internet connection function, and the network is the Internet.

### BRIEF DESCRIPTION OF THE DRAWINGS

FIG. 1 is a diagram showing the basic configuration of a simplified order placement and reception processing system according to the present invention.
FIG. 2 is a diagram showing the system configuration of a first embodiment of the simplified order placement and reception processing system according to the present invention.
FIG. 3 is a flowchart showing an additional-material ordering program.
FIG. 4 is a flowchart showing a delivery status inquiry program.
FIGS. 5 and 6 are flowcharts showing order placement and reception processing performed by a PDA.
FIGS. 7A to 7C are explanatory diagrams showing a login screen.
FIG. 8 is an explanatory diagram showing inventory inquiry processing.
FIG. 9 is an explanatory diagram showing operation of an order placement screen.
FIG. 10 is an explanatory diagram showing order-placement operation with designation of urgent delivery service.
FIG. 11 is an explanatory diagram showing operation of inputting conditions on a voucher inquiry screen.
FIG. 12 is an explanatory diagram showing operation of selecting a voucher on the voucher inquiry screen.
FIG. 13 is an explanatory diagram showing operation of confirming an order.

### DESCRIPTION OF THE PREFERRED EMBODIMENTS

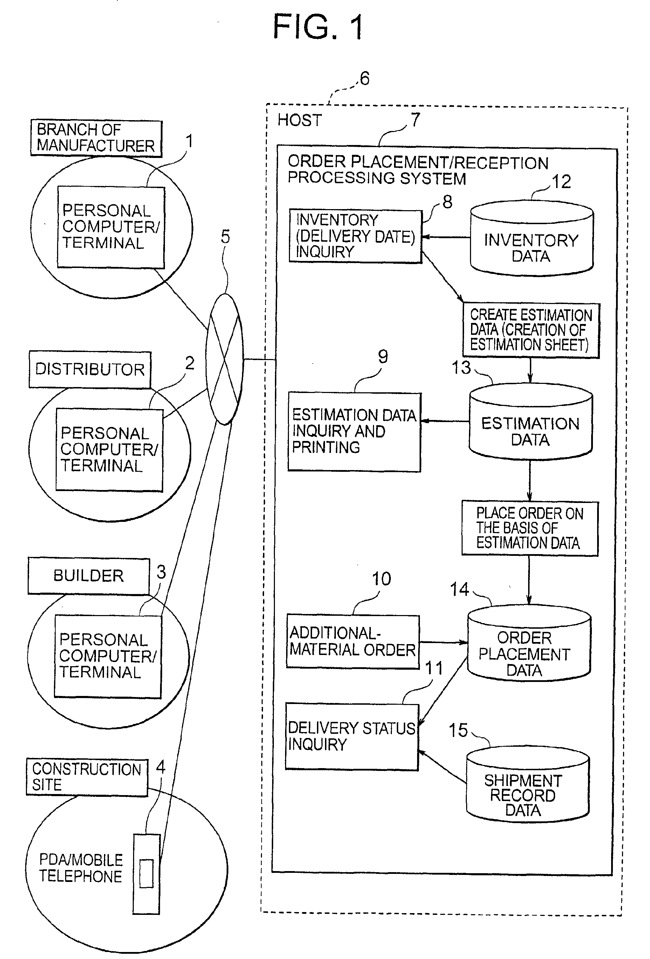

FIG. 1 shows the basic configuration of a simplified order placement and reception processing system according to the present invention.

As shown in FIG. 1, reference numeral 1 denotes a personal computer or terminal provided at a branch of an architectural material manufacturer; 2 denotes a personal computer or terminal provided at a distributor such as a retail shop or wholesaler; 3 denotes a personal computer or terminal provided at a builder; and 4 denotes a PDA such as a mobile telephone (or a portable telephone, a cellular phone, etc.) carried by the builder, the distributor, or an employee of the architectural material manufacturer at a construction site. Reference numeral 5 denotes a network such as the Internet. Reference numeral 6 denotes a host computer 6 provided at the architectural material manufacturer and adapted to manage order placement and reception processing. Reference numeral 7 denotes an order placement and reception processing system 7 operated on the host computer 6.

The mobile telephone 4 has a function for establishing connection with the Internet 5 (hereinafter referred to as an "Internet connection function") and a liquid crystal display having a small screen size. A customer operates the mobile telephone 4 in order to connect the mobile telephone 4 to the host computer 6 via the Internet 5 to thereby access the order placement and reception processing system 7, which is an application program executed by the host computer 6. The order placement and reception processing system 7 transmits a menu screen to the mobile telephone 4; and the customer selects, from the menu, processing such as inventory inquiry (delivery date inquiry) 8, estimation data inquiry and printing 9, additional-material order 10, or delivery status inquiry 11.

When inventory inquiry (delivery date inquiry) 8 is selected, the order placement and reception processing system 7 searches an inventory data file 12 for a designated product while using the product number as a key, and transmits a reply to the mobile telephone 4 to thereby enable the mobile telephone 4 to display the reply on the screen. When a delivery date of a certain product is inquired, the order placement and reception processing system 7 transmits a corresponding delivery date as a reply. When the product is not in stock or the quantity of stock is insufficient, the order placement and reception processing system 7 checks a stocking schedule, and transmits it as a reply. The customer who uses the mobile telephone 4 watches an inventory-inquiry reply screen and creates estimation data. When the customer wishes to place an order, the customer performs order placement processing. The estimation data created by the customer are stored in an estimation data file 13. Upon placement of the order, the estimation data are copied to an order placement data file 14 to serve as order placement data.

When the customer confirms the details of the order or places an additional order, the customer must refer to estimation data regarding products which have been ordered by the customer or other members of the relevant distribution channel (trade connections such as retail shops and wholesalers). In this case, the customer selects an estimation-data inquiry from the menu. The order placement and reception processing system 7 stores the ID of the customer and information regarding members of a relevant product distribution channel in the form of a file. The order placement and reception processing system 7 obtains information of the customer and the members of the product distribution channel from the file, retrieves necessary estimation data from the estimation data file 13, and transmits the estimation data to the mobile telephone 4 to thereby enable the mobile telephone 4 to display the data on the screen. The customer can confirm the estimation data displayed on the mobile telephone 4, and, on the basis thereof, the customer can place an order by means of the additional-material order processing 10.

When the customer wishes to check the delivery of a certain product at a construction site, the customer selects the delivery status inquiry processing 11. With reference to the order placement data file 14, which stores data regarding orders which the architectural material manufacturer has received, and a shipment record data file 15, which manages delivery status, the order placement and reception processing system 7 transmits to the mobile telephone 4 data representing whether or not the product has been delivered, delivery schedule, etc. to thereby enable the mobile telephone 4 to display the data on the inquiry reply screen.

A preferred embodiment in which the simplified order placement and reception processing system according to the present invention is applied to transactions in architectural materials will be described.

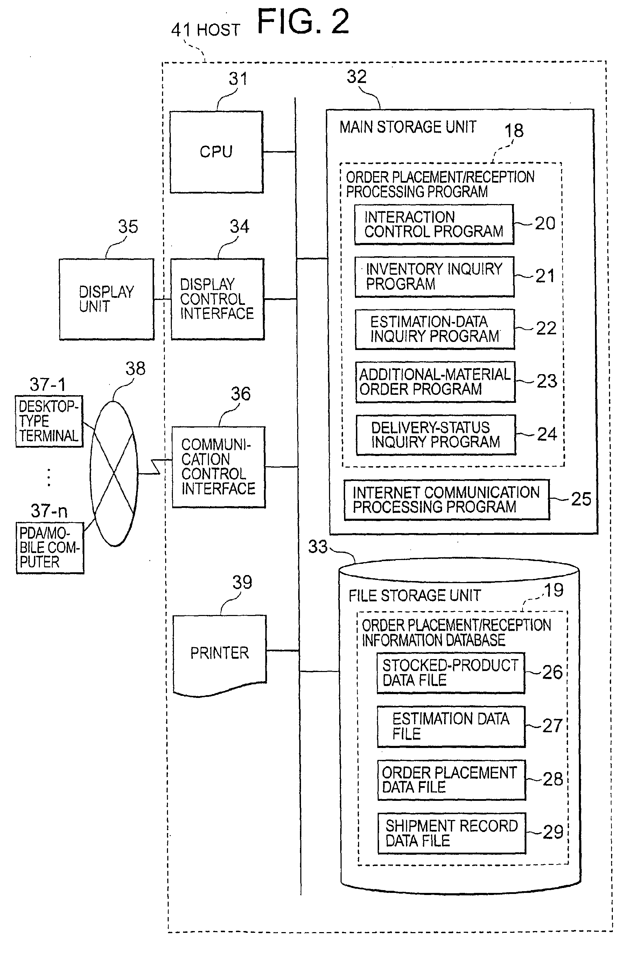

FIG. 2 shows the system configuration. Reference numeral 41 denotes a host computer 6; 38 denotes a network such as an Internet; 37-1 denotes a desktop-type personal computer or terminal provided at the office of a customer; 37-n denotes a PDA such as a potable computer or a portable terminal carried by the customer; 31 denotes a CPU; 32 denotes a main storage unit such as a SDRAM; 33 denotes a file storage unit such as a HDD; 34 denotes a display control interface; 35 denotes a display unit; 36 denotes a communication control interface such as a modem or LAN; and 39 denotes a printer. Reference numeral 18 denotes an order placement and reception processing program including programs 20 to 24; 19 denotes an order placement and reception information database including data files 26 to 29; 20 denotes an interactive control program; 21 denotes an inventory inquiry program; 22 denotes an estimation-data inquiry program; 23 denotes an additional-material order program; 24 denotes a delivery-status inquiry program; 25 denotes an Internet communication processing program; 26 denotes a stocked-product data file; 27 denotes an estimation data file; 28 denotes an order placement data file; and 29 denotes a shipment record data file.

The order placement and reception processing program 18 is accessed from the desktop-type terminal 37-1 or the PDA 37-n of the customer. In response to a request, the order placement and reception processing program 18 performs processing for inventory inquiry, estimation-data inquiry, additional-material order, or delivery-status inquiry in an interactive manner. The Internet communication processing program 25 supports communication processing when the terminal is connected to the host computer 6 via the Internet 5.

In cooperation with the programs 21 to 24, the interaction control program 20 identifies commands from the terminal 37-1 and PDA 37-n and performs, in an interactive manner, provision of a menu screen, changeover between a processing screen and a program, and data exchange in accordance with the commands.

In response to a stocked-product inquiry from the terminal 37-1 or PDA 37-n, the inventory inquiry program 21 searches the stocked-product data file 26 of the order placement and reception information database 19, and provides information regarding the inquired product. Specifically, the inventory inquiry program 21 performs processing for transmitting to the terminal, as a reply, information as to presence/absence of stock, the quantity of stock, and delivery date. The inquiry about a stocked product is performed with designation of its product number; and the presence/absence of stock and the quantity of stock are first reported. When the requesting terminal is the desktop-type terminal 37-1, the detailed specifications of the product, a photograph of the product, etc., can be transmitted to the terminal. When a delivery date of the product is inquired, the inventory inquiry program 21 calculates a delivery date for the case of regular delivery on the basis of the status of stock and provides the calculated delivery date as a reply.

In response to an estimation data inquiry from the terminal 37-1 or PDA 37-n, the estimation-data inquiry program 22 searches the estimation data file 27 for estimation data which the customer or other parties of a product distribution channel to which the customer relates have been created upon placement of a previous order, and provides the searched estimation data as a reply. This enables the customer to confirm products having been ordered, and helps the customer to create estimation data for placement of a new order.

Notably, for the desktop-type terminal, sophisticated service is provided. That is, a plurality of patterns or templates for creation of estimation data are prepared in advance in order to enable the customer to select a pattern or template from those listed on a menu, in accordance with a manner of ordering, such as selecting and designating a completed product, designating a pre-cut product by use of a sub-menu, or freely setting dimensions and cutting conditions by use of a free-planning menu. As to the mobile telephone, the volume of information to be displayed is minimized, and default values are used for input operation to thereby simplify the input operation.

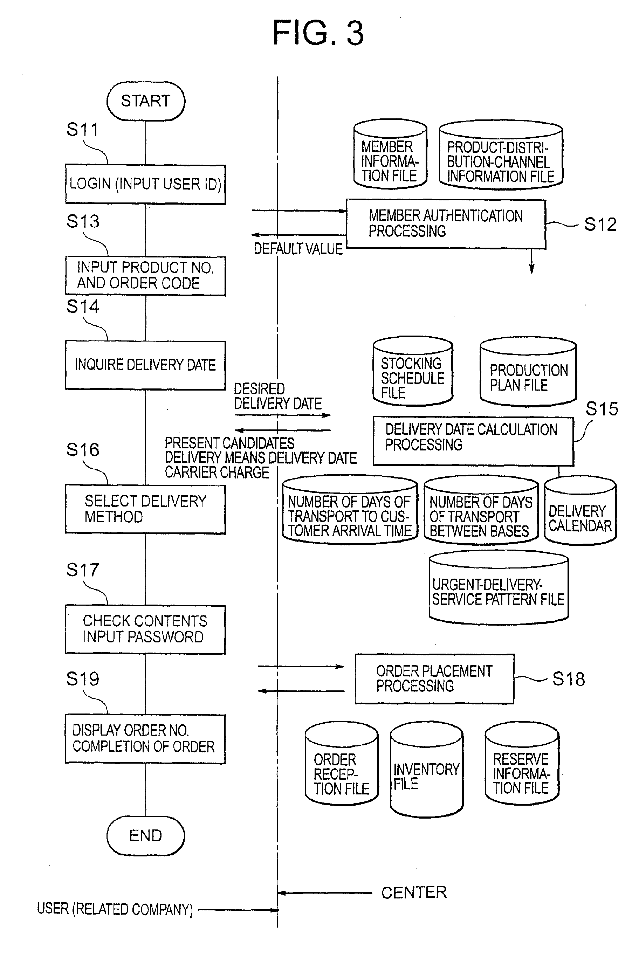

The additional-material order program 23 enables the customer to perform a simplified order procedure on the PDA 37-n when an urgent need arises. The details of the processing will be described with reference to the flowchart of FIG. 3.

As shown in FIG. 3, when a connection request is issued from the customer's PDA 37-n, the additional-material order program 23 displays a login screen to prompt the customer to input customer's user ID (step S11), and then performs member authentication processing (step S12). The member authentication processing judges whether the customer is a member and determines whether to accept an order or an inquiry of estimation data (vouchers) which are opened to members only. For such a purpose, there are provided a member information file, in which user IDs of the members are registered, and a product-distribution-channel information file, in which are stored customer information of a product distribution channel of each member. The additional-material order program 23 compares the user ID which the customer entered at the time of login with the IDs registered in the member information file to thereby authenticate the customer as a member. Simultaneously, customer information of the product distribution channel of the authenticated member is retrieved.

The customer selects inventory inquiry or order placement from the menu and inputs the product number of a certain product and an order code (steps S13). The customer's PDA 37-n issues a request to inquire the delivery date to the additional-material order program 23 (step S14). The additional-material order program 23 which receives the inquiring request performs delivery date calculation processing (step S15). That is, the additional-material order program 23 transmits the status of stock of the product and a delivery date in the form of an inventory screen. For such a purpose, the additional-material order program 23 checks the stock and calculates the delivery date. The delivery date is calculated by means of regular-delivery-service delivery-date calculation processing or urgent-delivery-service arrival date/time calculation processing. The additional-material order program 23 first performs the regular-delivery-service delivery-date calculation processing in order to calculate a delivery date for the case of regular delivery service being used, and provides the calculated delivery date as a reply. When the customer is not satisfied with the calculated delivery date, the additional-material order program 23 performs urgent-delivery-service arrival date/time calculation processing in order to calculate a delivery date for the case of urgent delivery service being used, and provides the calculated delivery date as a reply. When a plurality of urgent delivery services meet the requirement on the arrival time, the delivery date calculation means transmits the plurality of urgent delivery services as a reply to thereby enable selection of one of the plurality of urgent delivery services.

In the regular-delivery-service delivery-date calculation processing, a delivery date and time for the case of a regular delivery service being used are calculated on the basis of a delivery calendar for regular delivery, data representing the number of days required for transport between bases, the number of days required for transport from a base to the customer, and the time of arrival at the customer. In the urgent-delivery-service arrival date/time calculation processing, available (or candidate) delivery means, their delivery dates, and their carrier charges are obtained from an urgent delivery pattern file in which delivery means and delivery routes to be used for urgent delivery are registered. When the product is not in stock, a delivery date is predicted with reference to a product plan file and a stocking schedule file in which is recorded a schedule listing the time when the product is to be stocked, and provides the predicted delivery date as a reply.

The customer's PDA 37-n which receives the candidates above described including the delivery date displays the candidates on the screen. The customer selects the delivery method including the delivery date (step S16), and the customer's PDA 37-n sends back the selection to the additional-material order program 23.

The additional-material order program 23 causes the terminal to display an order confirmation screen based on the above selection. The customer confirms the details of the order, including the type of the product, the number of pieces, price, delivery date, and delivery destination and input the password (step S17). When the customer performs a decision operation (pressing "OK"), the additional-material order program 23 performs order placement processing (step S18). The order placement data are stored and managed in an order reception file. The number of pieces of the product in the order reception file is compared with that of the inventory file, and the number of pieces of the product that can be delivered is stored in a reserve information file. The additional-material order program 23 sends the message including the order number and completion of the order, and the customer's PDA 37-n display the message (step S19).

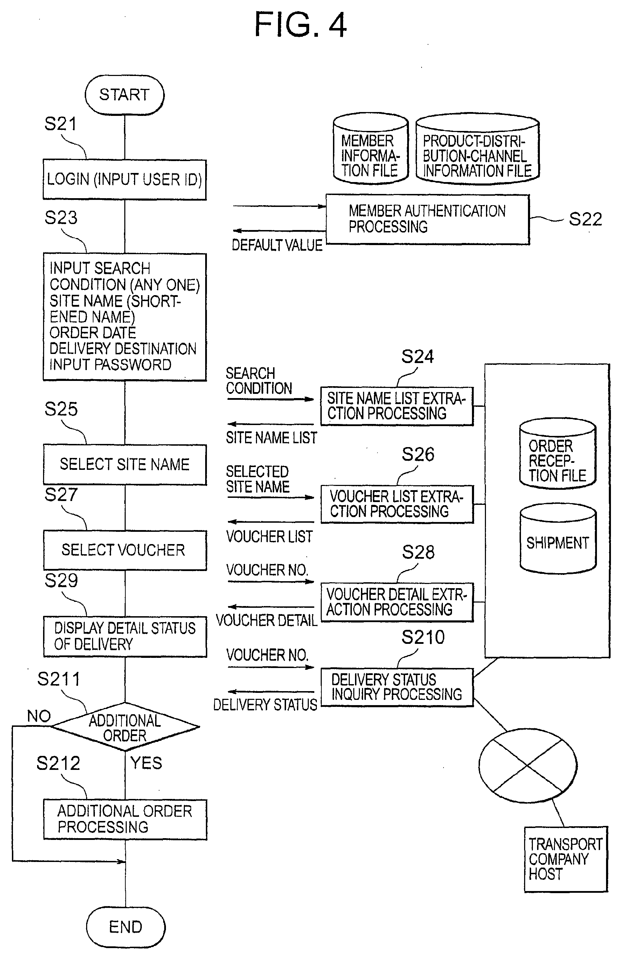

The delivery-status inquiry program 24 manages shipment record data which represent delivery of a product based on the order placement data. In response to a delivery-status inquiry from the PDA 37-n, the delivery-status inquiry program 24 creates delivery status data with reference to the order placement data and the shipment record data and transmits the delivery status data to the PDA 37-n, to thereby enable the PDA 37-n to display the delivery status data on the screen. The details of the delivery-status inquiry program 24 will be described with reference to the flowchart of FIG. 4.

As shown in FIG. 4, when a login request is issued from the customer's PDA 37-n (step S21), the delivery-status inquiry program 24 performs member authentication processing on the basis of the user ID of the customer, to thereby authenticate the customer as a member (step S22). Subsequently, the delivery-status inquiry program 24 requests the customer' PDA 37-n to input search conditions. The PDA 37-n inputs and sends any one of a construction site name, an order date, a delivery destination, etc., as conditions for searching order placement data (step S23). Then, the delivery-status inquiry program 24 performs site name list extraction processing (step S24). That is, the program 24 searches the order reception file based on the search conditions input. When a construction site name is designated to be included in the search conditions, the delivery-status inquiry program 24 extracts construction site names from the order reception file, produces a list of construction site names, and displays the list on the screen of the PDA 37-n. The customer selects a certain construction site name from the list (step S25). The delivery-status inquiry program 24, which receives the selection (selected site name), performs voucher list extraction processing (step S26). That is, the program 24 extracts from the order reception file all vouchers in relation to the construction site, produces a list of voucher numbers, and displays the list on the screen of the PDA 37-n. The customer selects a certain voucher number from the list (step S27). The delivery-status inquiry program 24, which receives the selection (selected voucher number), performs voucher detail extraction processing (step S28). That is, the program 24 extracts a voucher detail corresponding to the selected voucher number from the order reception data in the order reception file, and sends the list to the PDA 37-n. The PDA 37-n displays the list on the screen (step S29). Further, the delivery-status inquiry program 24 performs delivery-status inquiry processing (step S210). Specifically, the delivery-status inquiry program 24 searches the shipment file by use of the voucher number, or extracts delivery status data from a host computer 6 of a transport company in charge of the delivery, and displays the detailed status of the delivery on the screen of the PDA 37-n. When the customer who uses the PDA 37-n subsequently orders an additional material (step S211), processing proceeds to the additional-material order processing as shown in FIG. 3 (step S212).

Next, there will be described an embodiment of the simplified order placement and reception processing system of the present invention in which the customer is a member builder, and performs inquiry or order placement from a mobile telephone having an Internet connection function.

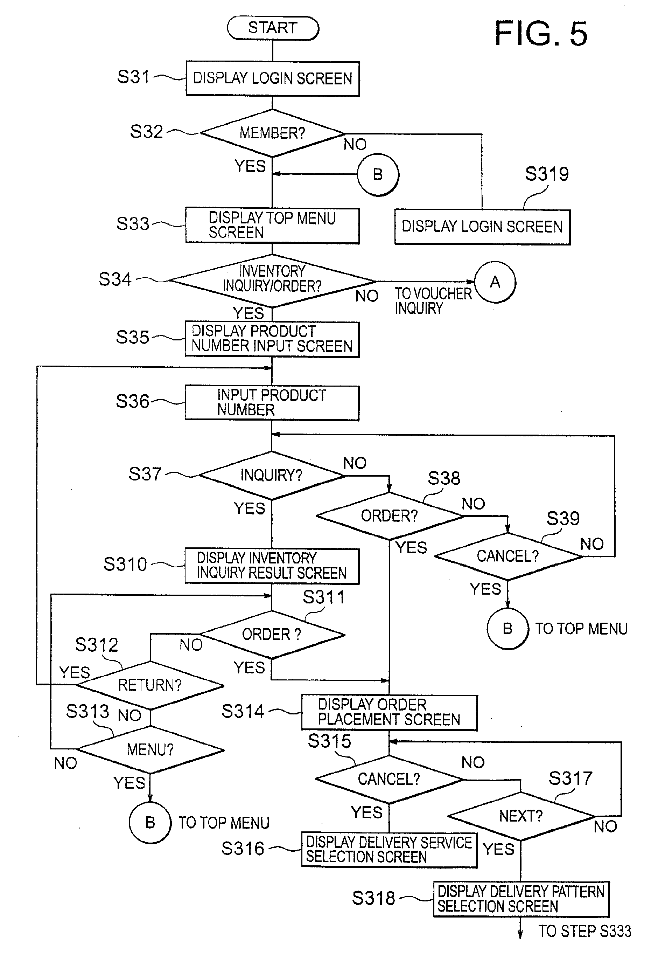

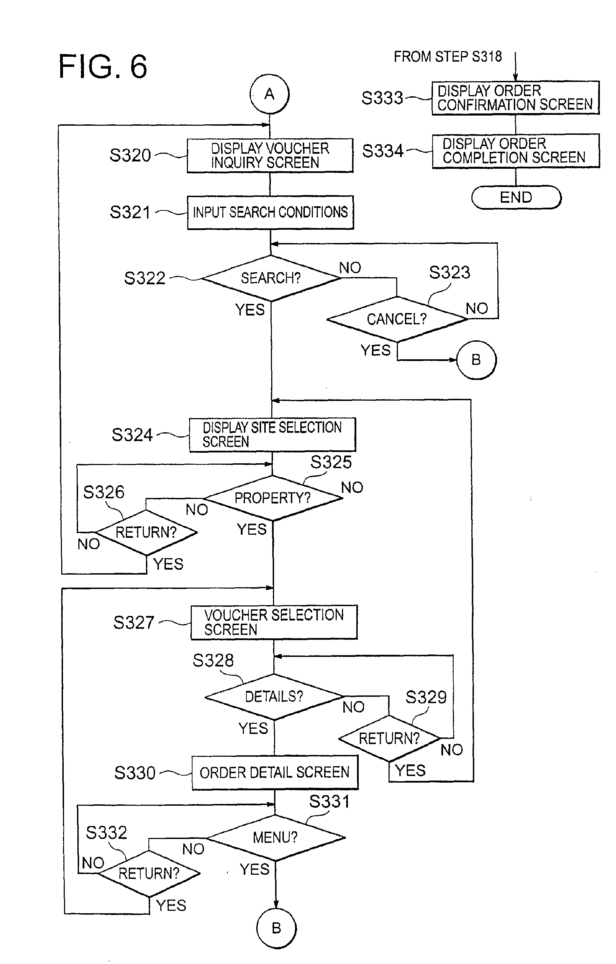

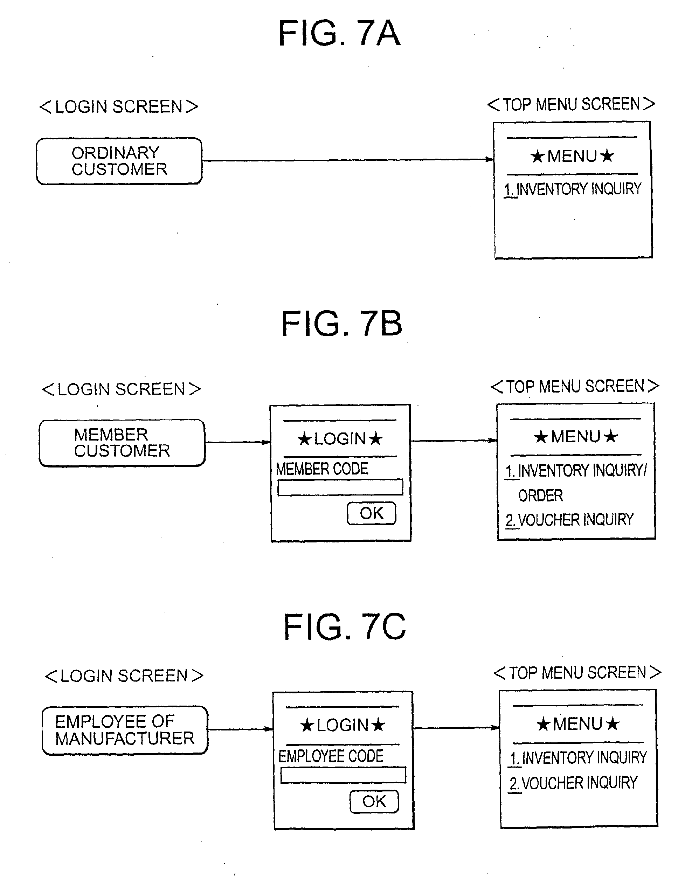

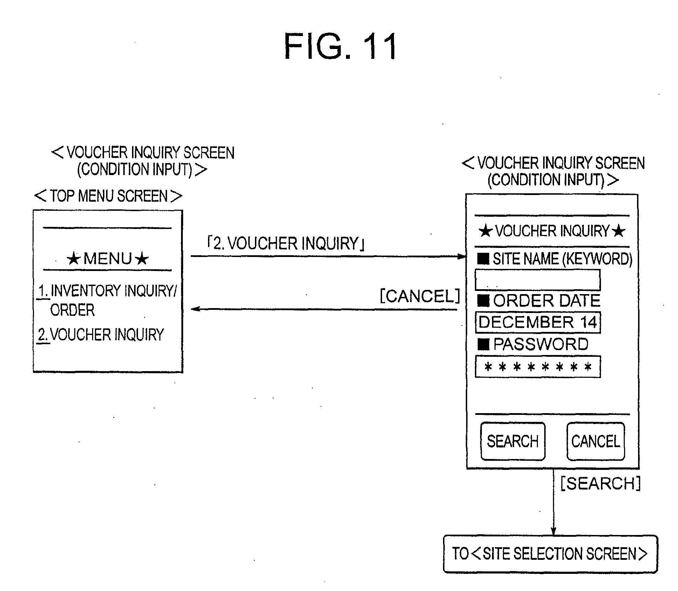

FIGS. 5 and 6 are flowcharts showing processing flow of the host computer 6. FIGS. 7 to 13 are flowcharts showing corresponding display screens and operations of the portable mobile telephone 4. The processing flow of FIGS. 5 and 6 will be described in accordance with steps S31 to S334 and with reference to FIGS. 7 to 13. Notably, the processing flow will be described while emphasis is placed on processing in relation to member customers (the portable mobile telephone 4).

Upon receipt of an access request from the mobile telephone 4, as shown in FIG. 7, the order placement and reception processing program 18 of the host computer 6 displays a login screen on the mobile telephone 4. The login screen is used for checking, on the basis of a member code or an employee code, whether an accessing person (or the telephone 4) is authorized to place an order or reference order vouchers (estimation data/order placement data). When an ordinary customer who is not a member accesses the host computer 6, without displaying the login screen, the host computer 6 displays a top menu screen which enables the customer to inquire about inventory only (step S31).

On the login screen, a member customer inputs customer's member code, and an employee of the architectural material manufacturer inputs an employee code. When the customer or employee is authenticated, the user can proceed to step S33. When the mobile telephone 4 is an ordinary customer who is not a member, the host computer 6 proceeds to step S319 and displays on the telephone 4 the top menu screen which enables the customer to inquire about inventory only (step S32).

On a top menu screen for members, the customer selects one of two types of processing; "Inventory Inquiry/Order" and "Voucher Inquiry." On a top menu screen for employees, the employee selects one of two types of processing, "Inventory Inquiry" and "Voucher Inquiry" (step S33).

When "Inventory Inquiry/Order" is selected on the top menu screen, the host computer 6 displays a product-number input screen in step S35. When "Voucher Inquiry" is selected, the host computer 6 displays a voucher inquiry screen in step S320 (step S34).

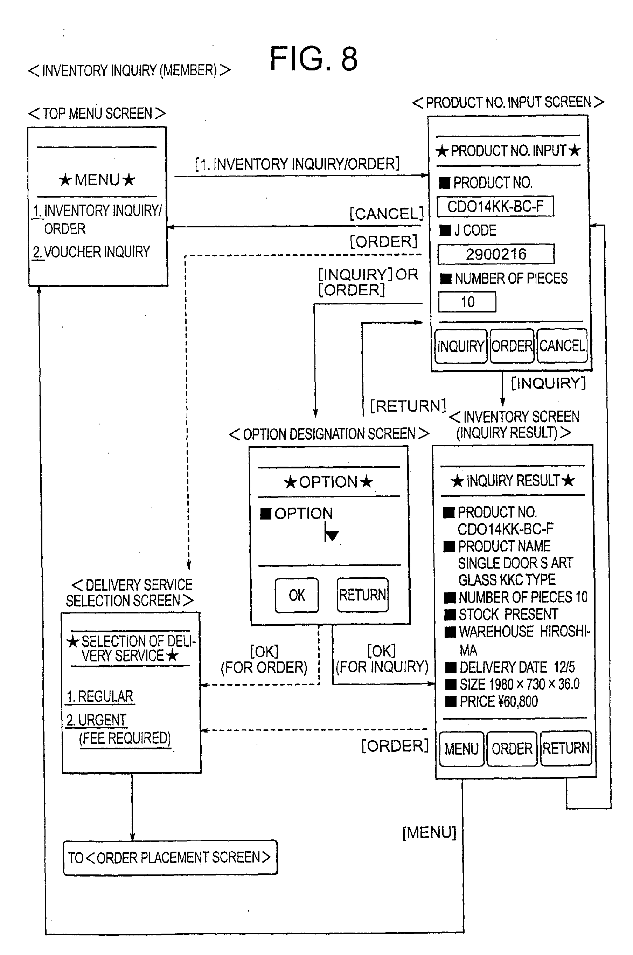

The host computer 6 displays on the mobile telephone 4 the product-number input screen shown in FIG. 8 (step S35). On the product-number input screen, the customer inputs the product number of a product which the customer wishes to know about, a J-code for classification/search, and the number of pieces. Subsequently, the customer selects one of "Inquiry" of stock, "Order," or "Cancel." That is, the customer can place an order directly from the product-number input screen, or can place an order after having inquired about the stock in order to check the stock and delivery date (step S36).

When "Inquiry" of stock is selected on the product-number input screen, the host computer 6 proceeds to step S310 (step S37). When "Order" is selected on the product-number input screen, the host computer 6 proceeds to step S314 (step S38). When "Cancel" is selected on the product-number input screen, the host computer 6 returns to step S33 (step S39).

The host computer 6 executes processing for inquiry of stock of the product, by use of the data set on the product-number input screen, and displays an inventory inquiry result screen shown in FIG. 8. Presence/absence of a required quantity of stock of the product, the location of a warehouse, a delivery date, and price are displayed on the inventory inquiry result screen. After checking the status of stock, the customer selects "Menu," "Order," or "Return." Through selection of "Order," the customer can proceed to order placement processing (step S314), which is performed on the basis of the data of the inventory inquiry result screen. Through selection of "Return," the customer can return to the product-number input screen in order to input a product number again. When "Menu" is selected, the host computer 6 returns to step S33 via step S313 in order to display the top menu again (step S310).

When "Order" is selected on the inventory inquiry result screen, the host computer 6 proceeds to step S314 (step S311). When "Return" is selected on the inventory inquiry result screen, the host computer 6 returns to step S36 in order to display the product-number input screen again (step S312). When "Menu" is selected on the inventory inquiry result screen, the host computer 6 returns to step S33 in order to display the top menu screen (step S313).

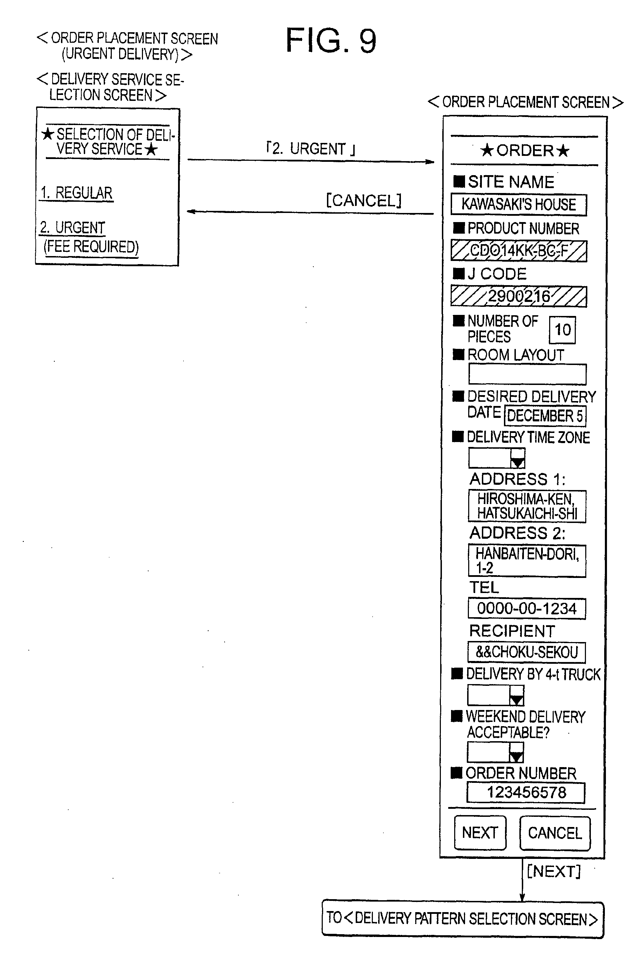

When "Order" is selected on the product-number input screen or the inventory inquiry result screen, the host computer 6 displays an order placement screen shown in FIG. 9. The order placement screen serves as a screen for creation of estimation data, on the basis of which an order will be placed. The customer inputs a delivery date, a time zone, a receiving person, a method of delivery (e.g., by truck), and then selects "Next" or "Cancel." In steps S315 and S317, the host computer 6 judges whether "Next" or "Cancel" has been selected (step S314).

When "Cancel" is selected on the order placement screen, the host computer 6 proceeds to step S316 and displays a delivery service selection screen (step S315).

The host computer 6 displays the delivery service selection screen shown in FIG. 9 and prompts the customer to select a regular delivery service or an urgent delivery service. On the order placement screen, use of a regular delivery service is set as a default or initial value. Therefore, when the customer wishes to use an urgent delivery service, the customer changes the default to use of an urgent delivery service on the delivery service selection screen (step S316).

When "Next" is selected on the order placement screen, the host computer 6 proceeds to step S318 in order to display a delivery pattern selection screen (step S317).

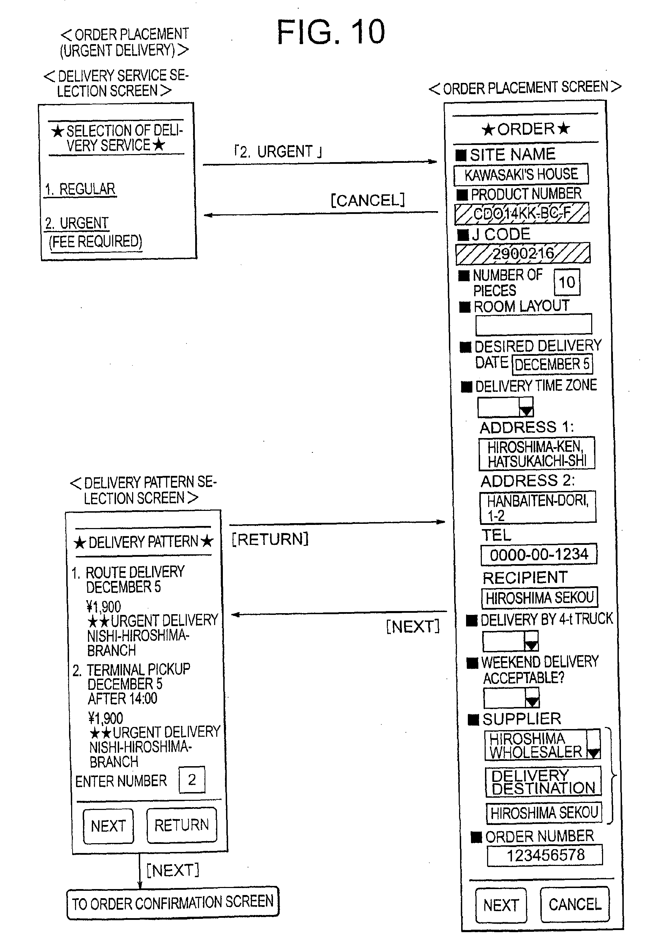

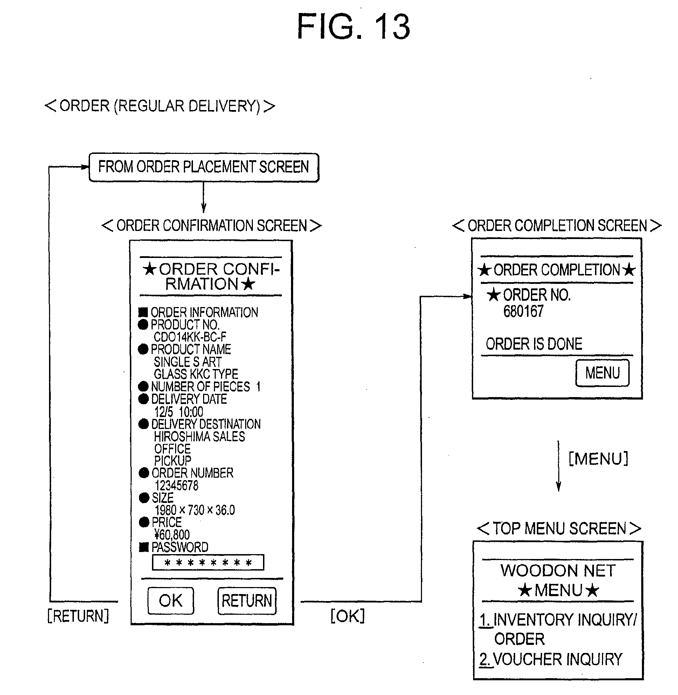

The host computer 6 displays the delivery pattern selection screen shown in FIG. 10. On the delivery pattern selection screen, the customer selects a delivery method, such as route delivery or pickup at a terminal, which satisfies desired delivery conditions. Subsequently, the customer selects "Return" or "Next." Through selection of "Return," the customer can return to the previous order placement screen. Through selection of "Next," the customer can decide the order via an order confirmation screen shown in FIG. 13 (step S318).

The host computer 6 performs processing for replying to an inquiry from a non-member customer as to stocked products (step S319).

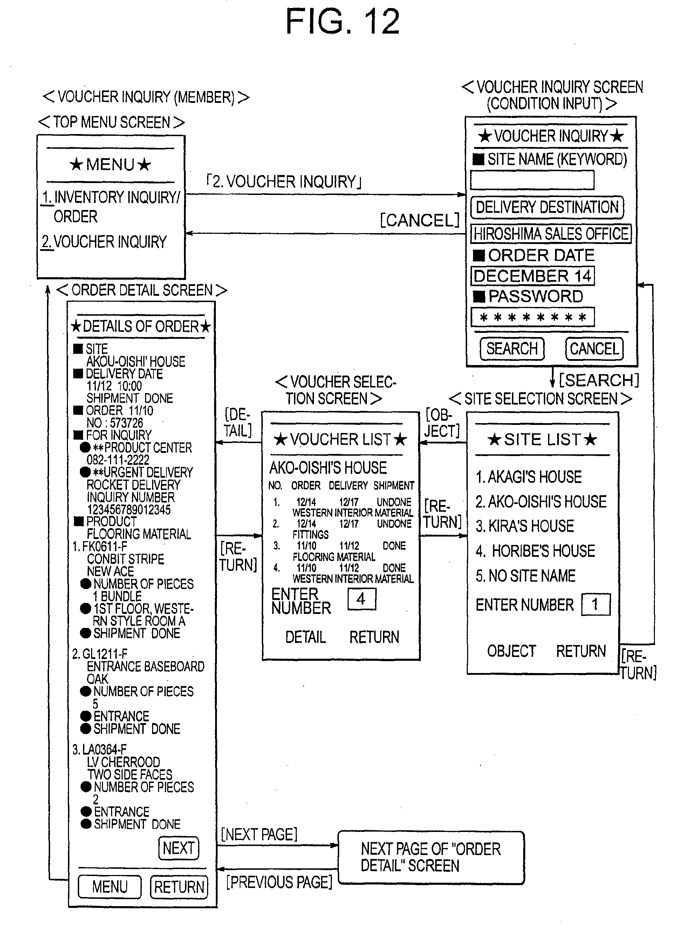

When "Voucher Inquiry" is selected on the top menu screen, the host computer 6 displays a voucher inquiry screen shown in FIG. 12. The voucher inquiry enables the customer to refer to vouchers in relation to orders which have been placed by the customer or orders which have been placed by a retail shop, a wholesaler, or a builder of a product distribution channel to which the customer relates. Such vouchers are useful when the customer places an additional order or checks delivery. For example, when the customer places an additional order while using data in a voucher, new input of delivery conditions, etc., can be omitted (step S320).

On the voucher inquiry screen, the customer inputs a construction site name, a supplier, or an order date, as search conditions, inputs a password, and then selects "Search" or "Cancel" (step S321). When "Search" is selected on the voucher inquiry screen, the host computer 6 proceeds to step S324 in order to display a site selection screen (step S322). When "Cancel" is selected on the voucher inquiry screen, the host computer 6 returns to step S33 in order to display the top menu screen (step S323).

The host computer 6 displays the site selection screen shown in FIG. 12. The site selection screen enables the customer to retrieve an order voucher while using a construction site (property name) as a key (step S324). When the customer designates a construction site (property name) on the site selection screen, and selects "Property," vouchers in relation to the site (property) are searched, and search results are displayed on a voucher selection screen shown in FIG. 12 (step S325). When "Return" is selected on the site selection screen, the host computer 6 returns to step S324 in order to display the site selection screen again to thereby enable the customer to select a site again (step S326).

The host computer 6 displays on the voucher selection screen a list of vouchers in relation to the designated site (step S327). When the customer selects the number of a necessary voucher on the voucher selection screen, and selects "details," the details of the voucher can be referred to by means of an order detail screen of FIG. 12 (step S328). When "Return" is selected on the voucher selection screen, the host computer 6 returns to S324 in order to display the voucher selection screen to thereby enable reselection of a site (step S329).

The details of the selected voucher are displayed on the order detail screen of FIG. 12. After confirmation of the details, the customer selects "Menu" or "Return" (step S330). When "Menu" is selected, the host computer 6 returns to step S33 in order to display the top menu screen again (step S331). When "Return" is selected, the host computer 6 returns to step S327 in order to display the previous voucher selection screen to thereby enable selection of a voucher number (step S332).

When "Next" is selected on the pattern selection screen in step S318, an order confirmation screen shown in FIG. 13 is displayed (step S333). When the customer inputs a password and selects "OK," the host computer 6 displays an order decision screen shown in FIG. 13, notifies the customer of an order number, and ends the processing (step S334).

The simplified order placement and reception processing method and system of the present invention enable a customer to check the details of a previous order or the status of delivery at any location, such as a construction site, away from customer's office, by use of a PDA such as a mobile telephone, and also enable the customer to immediately arrange an additional order, or an urgent order/delivery, at customer's location as the need arises. Therefore, various tasks can be performed quickly and smoothly.

## Claims

1. A method to process a simplified order placement and reception in a system comprising a host computer and a personal digital assistant connected to the host computer via a network, the method comprising;
storing stocked-product data and estimation data in an order placement and reception information database provided in the host computer;
transmitting from the host computer to the personal digital assistant the stocked-product data which is accompanied by the estimation data of a relevant product distribution channel, in response to an inquiry request from the personal digital assistant;
displaying the stocked-product data transmitted from the host computer on a screen in the personal digital assistant; and
placing an order from the screen on which the stocked-product data are displayed in the personal digital assistant.

2. A method according to claim 1, wherein the host computer sets known estimation data as default values in an order placement screen to be transmitted to the personal digital assistant.

3. A method according to claim 1, wherein the host computer calculates a delivery date and estimated price on the basis of the estimation data which the user has input and set on the personal digital assistant by use of the order placement screen, and transmits in real time the delivery date and estimated price to the personal digital assistant.

4. A method according to claim 1, wherein upon placement of an order, the host computer stores the estimation data in the order placement and reception information database as order placement data, and performs delivery management on the basis of the order placement data.

5. A method according to claim 4, wherein the host computer manages the order placement data stored in the order placement and reception information database in such a manner that the order placement data can be referred to, while be sorted according to customer, according to delivery date, or according to delivery area.

6. A method according to claim 4, wherein, on the basis of the order placement data stored in the order placement and reception information database, the host computer manages delivery items and delivery schedules according to customer, according to execution method, or according to construction site.

7. A method according to claim 4, wherein, in response to an inquiry request or search request from the personal digital assistant, the host computer transmits data of a previous order placement to the personal digital assistant in order to enable the personal digital assistant to display the data on the screen to thereby enable placement of an additional order.

8. A method according to claim 4, wherein the host computer stores in the order placement and reception information database shipment record data which represent delivery of a product based on the order placement data stored in the order placement and reception information database; and in response to a delivery-status inquiry request from the personal digital assistant, the host computer creates delivery status data with reference to the order placement data and the shipment record data and transmits the delivery status data to the personal digital assistant, to thereby enable the personal digital assistant to display the delivery status data on the screen.

9. A method according to claim 1, wherein the personal digital assistant is a mobile telephone having an Internet connection function, and the network is the Internet.

10. A system to process a simplified order placement and reception comprising:
a host computer; and
a personal digital assistant connected to the host computer via a network, and which performs processing to order a product and to accept the order,
wherein the host computer further comprises:
an order placement and reception information database to store stocked-product data and estimation data;
means for inquiring to retrieve the stocked-product data or estimation data of a relevant product distribution channel from the order placement and reception information database, to create an inquiry result screen containing the stocked-product data or estimation data, and to transmit the screen to the personal digital assistant to thereby enable the personal digital assistant to display the screen, in response to an inquiry request from the personal digital assistant; and
means for creating estimation-data to transmit an order placement screen to the personal digital assistant in response to an order placement request which is issued from the personal digital assistant in a case that the inquiry result screen containing the stocked-product data is displayed, and to enable the personal digital assistant to input and set estimation data to the order placement screen.

11. A system according to claim 10, wherein the host computer further comprises:
a member information file in which are registered data regarding to a member;
a product-distribution-channel information file in which are registered data regarding customers relating to a product distribution channel to which the member relates; and
means for processing member authentication to recognize an user ID which a customer inputs at the time of login, authenticate the member with reference to the member information file, and to retrieve from the product-distribution-channel information file information regarding customers relating to the product distribution channel to which the member relates.

12. A system according to claim 10, wherein the host computer includes means for calculating delivery date to perform regular-delivery-service delivery-date calculation processing and urgent-delivery-service arrival date/time calculation processing, and to transmit the calculated delivery date to the personal digital assistant to thereby enable the personal digital assistant to display the delivery date on the screen, in response to a delivery date inquiry request from the personal digital assistant.

13. A system according to claim 12,
wherein, in a case that the delivery date inquiring request from the personal digital assistant includes designation of a desired delivery date, the means for calculating delivery date performs the regular-delivery-service delivery-date calculation processing in order to calculate a delivery date for the case of regular delivery service being used, and provides the calculated delivery date as a reply,
wherein, in a case that the customer is not satisfied with calculated delivery date, the means for calculating delivery date performs urgent-delivery-service arrival date/time calculation processing in order to calculate a delivery date for the case of urgent delivery service being used, and provides the calculated delivery date as a reply, and
wherein, in a case that a plurality of urgent delivery services meet the requirement imposed on the arrival time, the means for calculating delivery date transmits the plurality of urgent delivery services as a reply to thereby enable selection of one of the plurality of urgent delivery services.

14. A system according to claim 10, wherein the host computer includes means for managing delivery status to manage in the order placement and reception information database shipment record data which represent delivery of a product based on the order placement data stored in the order placement and reception information database, to create delivery status data with reference to the order placement data and the shipment record data and transmits the delivery status data to the personal digital assistant, and to enable the personal digital assistant to display the delivery status data on the screen, in response to a delivery-status inquiry from the personal digital assistant.

15. A system according to claim 11, wherein the personal digital assistant is a mobile telephone having an Internet connection function, and the network is the Internet.
